# EUROPEAN PATENT APPLICATION

(11) **EP 2 377 697 A1**
(43) Date of publication of application: **19.10.2011**
(21) Application number: 10004004.7
(22) Date of filing: 15.04.2010
(51) Int. Cl.: B60C 23/04

(54) **Smart antenna system and method for tire pressure monitoring and smart tire pressure monitoring system**

(71) Applicant: Delta Electronics, Inc., Taoyuan Hsien 33341 (TW)
(72) Inventor: Sun, Chun-Yi, Taoyuan Hsien 33341 (TW); Lin, Jon-Hong, Taoyuan Hsien 33341 (TW)
(74) Representative: TER MEER - STEINMEISTER & PARTNER GbR

(57) **Abstract**

A smart antenna system (32) and a method for the same for tire pressure monitoring are provided. The smart antenna system (32) comprises a plurality of antennas (212A~ 212E). The smart antenna system (32) transmits respectively a test signal to a vehicle controller (10) via a plurality of antenna. The vehicle controller (10) selects the antenna transmitting test signals with highest received signal strength indication (RSSI) among the plurality of antennas (212A~212E) as a default antenna. The tire pressure monitoring module (20) selects the default antenna as the antenna to send a tire pressure data signal.

## Description

### BACKGROUND OF THE INVENTION

### Field of the Invention

The invention generally relates to a smart antenna system and method of the same, in particular to a smart antenna system and method of the same for tire pressure monitoring using a plurality of antennas.

### Description of Prior Art

When the pressure applied to a tire (referred as tire pressure in the following) is abnormal, there are disadvantages such as affecting brake performance or increasing possibility of tires going flat while driving causing car accident in addition to decreasing tire service life and increasing fuel consumption. Therefore, a tire pressure monitor system (Tire Pressure Monitoring System, referred as TPMS in the following) is gradually applied in cars to assure driving safety so as to effectively avoid car accidents caused by driving in a car having abnormal tire pressures.

Normal tire pressure monitor system comprises a tire pressure monitoring module installed in the tire, and a vehicle controller installed in a car. The tire pressure monitoring module measures tire pressure data of a tire, then wirelessly transmits the tire pressure data to a vehicle controller installed in a car. The tire pressure data is displayed as a reference to the driver.

The currently-available tire pressure monitoring module is installed in the tire and uses a set of fixed antennas to send tire pressure data. However, if the pressure monitoring module within the tire is located in the signal reception dead zone of the vehicle controller in the car during vehicle operation, the vehicle controller in the car may not be able to receive the tire pressure data precisely because signals for carrying the tire pressure data are too weak.

### SUMMARY OF THE INVENTION

In order to overcome the disadvantages of above mentioned prior art, an objective of the present invention is to provide a smart antenna system for tire pressure monitoring to overcome the signal reception dead zone problem of a vehicle controller.

In order to overcome the disadvantages of above mentioned prior art, another objective of the present invention is to provide a smart tire pressure monitoring system to overcome the signal reception dead zone problem of a vehicle controller.

In order to overcome the disadvantages of above mentioned prior art, still another objective of the present invention is to provide a smart antenna method for tire pressure monitoring to overcome the signal reception dead zone problem of a vehicle controller.

In order to achieve the above objective of the present invention, the smart antenna system of the present invention is used in a vehicle controller and comprises at least a tire pressure monitoring module. Each tire pressure monitoring module comprises: a tire micro control unit, a tire RF transmit unit electrically connected to the tire micro control unit, a tire RF receive unit electrically connected to the tire micro control unit, a tire pressure inspecting unit electrically connected to the tire micro control unit and a plurality of antennas electrically connected to the tire RF transmit unit and the tire RF receive unit. The tire micro control unit selects a default antenna among the a plurality of antennas to send a tire pressure data signal to the vehicle controller for displaying a tire pressure data via the default antenna of the smart tire pressure monitoring module after a default antenna signal sent by the vehicle controller is received.

In order to achieve the above another objective of the present invention, the smart tire pressure monitoring system of the present invention comprises: a vehicle controller disposed in a vehicle, and at least a tire pressure monitoring module, disposed in a vehicle tire. Each tire pressure monitoring module comprises a tire micro control unit, a tire RF transmit unit electrically connected to the tire micro control unit, a tire RF receive unit electrically connected to the tire micro control unit, a tire pressure inspecting unit electrically connected to the tire micro control unit, and a plurality of antennas electrically connected to the tire RF transmit unit and the tire RF receive unit. The vehicle controller elects the antenna transmitting test signals with highest received signal strength indication (RSSI) among the antennas as a default antenna. The tire micro control unit sends a tire pressure data signal to the vehicle controller for displaying a tire pressure data via the default antenna.

In order to achieve the above still another objective of the present invention, the smart antenna method for tire pressure monitoring of the present invention is used in a vehicle controller and at least a tire pressure monitoring module. The tire pressure monitoring module comprises a plurality of antennas. One of the antennas sends a tire pressure data signal to the vehicle controller for displaying a tire pressure data. The smart antenna method comprises: the antenna of the tire pressure monitoring module transmitting a test signal respectively to the vehicle controller, the vehicle controller receiving the test signal transmitted by the antenna and recording the RSSI of the test signal, the vehicle controller comparing RSSI strength of the test signal and elects the antenna transmitting test signals with highest received signal strength indication (RSSI) among the antennas as a default antenna, the vehicle controller transmitting data of the default antenna to the tire pressure monitoring module and the tire pressure monitoring module selecting the antenna to send the tire pressure data signal according to data of the default antenna.

### BRIEF DESCRIPTION OF DRAWING

The features of the invention believed to be novel are set forth with particularity in the appended claims. The invention itself, however, may be best understood by reference to the following detailed description of the invention, which describes an exemplary embodiment of the invention, taken in conjunction with the accompanying drawings, in which:
Fig. 1 is block diagram of a smart antenna system for tire pressure monitoring according to the present invention;
Fig. 2 is a flowchart of a smart antenna method for tire pressure monitoring according to the present invention; and
Fig. 3 is the schematic diagram of a helical external antenna.

### DETAILED DESCRIPTION OF THE INVENTION

According to present invention, the smart antenna system and method for tire pressure monitoring use a tire pressure monitoring module having multi antennas and installed in a tire. The vehicle controller disposed in the car receives signals from various antennas and selects the antenna used by tire pressure monitoring module for sending tire pressure data signal based on the Received Signal Strength Indication (RSSI) of signals. Such mechanism is effective in lowering the error rate of the tire pressure data signal received by the vehicle controller so as to offer immediate and precise tire pressure data.

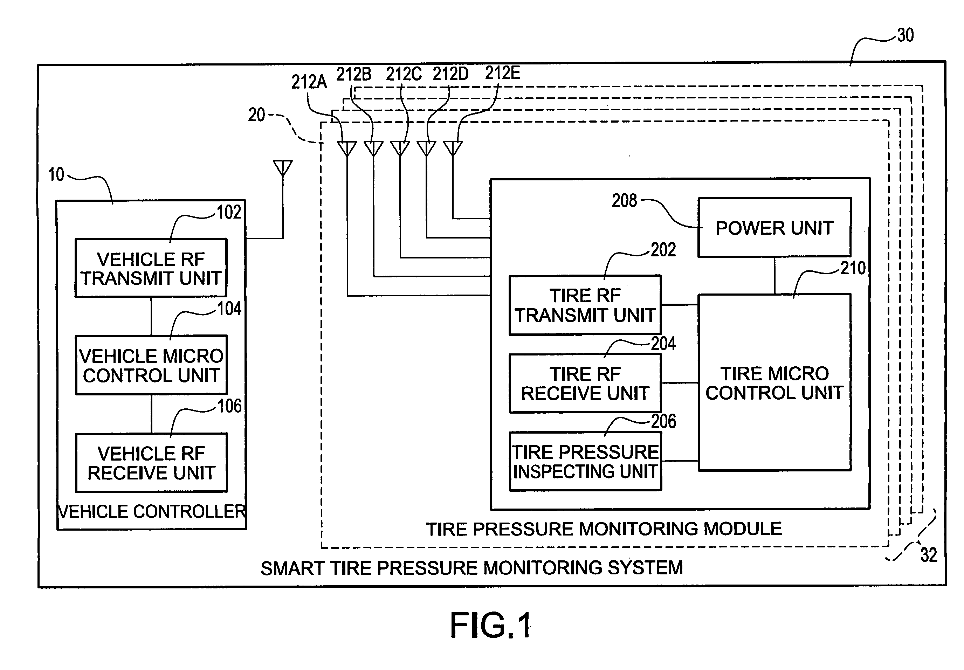

Fig. 1 is block diagram of a smart antenna system for tire pressure monitoring according to the present invention. According to the present invention, a smart tire pressure monitoring system 30 comprises a smart antenna system 32 and a vehicle controller 10. The smart antenna system 32 comprises at least a tire pressure monitoring module 20. For example, if each tire pressure monitoring module 20 is installed in a vehicle tire, the smart antenna system 32 may comprise four tire pressure monitoring modules 20 for monitoring tire pressure of each tire. The example is used as an embodiment alternative and should not be used to limit the scope of the invention. To provide further details, a tire pressure monitoring module 20 is used herein as an example. As shown in the Fig. 1, the smart antenna system 32 is used in a vehicle controller 10. The vehicle controller 10 comprises a vehicle RF transmit unit 102, a vehicle micro control unit 104 and a vehicle RF receive unit 106. The vehicle micro control unit 104 is electrically connected to the vehicle RF transmit unit 102 and the vehicle RF receive unit 106.

The tire pressure monitoring module 20 comprises a tire RF transmit unit 202, a tire RF receive unit 204, a tire pressure inspecting unit 206, a power unit 208, a tire micro control unit 210 and a plurality of antennas 212A~212E. the tire micro control unit 210 is electrically connected to the tire RF transmit unit 202, the tire RF receive unit 204, the tire pressure inspecting unit 206 and the power unit 208. The antenna 212A~212E is electrically connected to the tire RF transmit unit 202 and the tire RF receive unit 204. The tire micro control unit 210 of the tire pressure monitoring module 20 sends a tire pressure data signal to the vehicle controller 10 for displaying a tire pressure data via one of the antenna 212A~212E.

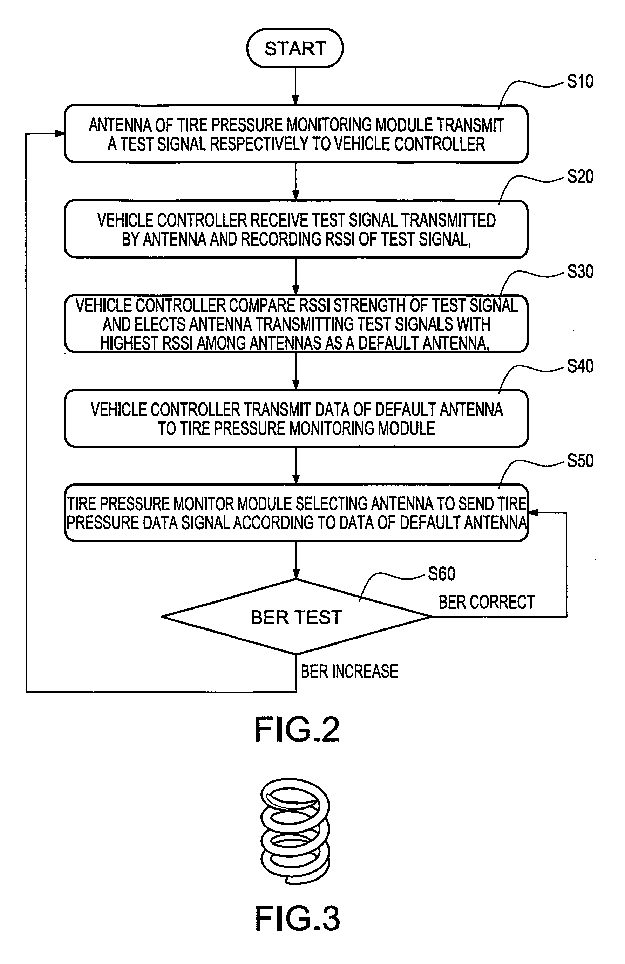

Fig. 2 is a flowchart of a smart antenna method for tire pressure monitoring according to the present invention. Refer to Fig. 1 and Fig. 2, when the vehicle is started initially, the vehicle controller 10 wakes up the tire pressure monitoring module 20. First, the tire pressure monitoring module 20 transmits respectively a test signal to the vehicle controller 10 via the antenna 212A~212E (S10). The vehicle controller 10 receives the test signal transmitted from the antenna 212A~212E and record RSSI for each of the received signals (S20).

It follows that the vehicle controller 10 compares RSSI strength of the test signal and selects the antenna transmitting test signals with highest received signal strength indication (RSSI) among the antennas as the default antenna to send the test signal among antennas 212A~212E (S30). Consequently, the vehicle controller 10 transmits a default antenna signal with default antenna data to the tire pressure monitoring module 20 (S40). Then, the tire micro control unit 210 of the tire pressure monitoring module 20 selects a default antenna to send the tire pressure data signal according to the data of the default antenna (S50). Lastly, if the Bit Error Rate (BER) of the tire pressure data signal sent by the default antenna increases, the process moves back to step S10; if the BER of the tire pressure data signal sent by the default antenna default antenna is normal, then the process moves back to step S50.

The possible implementations of the antennas 212A~212E include an air tap of the tire, a steel band for fixing the tire pressure monitoring module 20, an air tap cover of the tire, an external antenna on the tire pressure monitoring module 20 (for example a helical external antenna as shown in Fig. 3), or a printed antenna on a circuit board in the tire pressure monitoring module 20. Refer to Fig.1, the alternative embodiments are: the antenna 212A is an air tap of the tire; the antenna 212B is a steel band for fixing the tire pressure monitoring module 20; the antenna 212C is an air tap cover of the tire; the antenna 212D is an external antenna of the tire pressure monitoring module 20 (for example a helical external antenna as shown in the Fig. 3); and the antenna 212E is a printed antenna on the circuit board in the tire pressure monitoring module 20.

The smart antenna system and method for tire pressure monitoring of the present invention uses tire pressure monitoring module with multi-antenna installed in a tire. The vehicle controller in the car selecting the antenna transmitting the test signals with highest RSSI among the antenna as a default antenna. The tire pressure monitoring module sends the tire pressure data signals to the vehicle controller for displaying the tire pressure data as user's reference via the default antenna

## Claims

1. A smart antenna system (32) for tire pressure monitoring used in a vehicle controller (10) and comprising at least a tire pressure monitoring module (20); the tire pressure monitoring module (20) comprising:
a tire micro control unit (210);
a tire RF transmit unit (202) electrically connected to the tire micro control unit (210);
a tire RF receive unit (204) electrically connected to the tire micro control unit (210);
a tire pressure inspecting unit (206) electrically connected to the tire micro control unit (210); and
a plurality of antennas (212A~212E) electrically connected to the tire RF transmit unit (202) and the tire RF receive unit (204),
wherein, the tire micro control unit (210) selects a default antenna among the a plurality of antennas (212A~212E) to send a tire pressure data signal to the vehicle controller (10) for displaying a tire pressure data via the default antenna of the smart tire pressure monitoring module (20) after a default antenna signal sent by the vehicle controller (10) is received.

2. The smart antenna system (32) of claim 1, wherein the antennas include at least two of a air tap of the tire (212A), a fixing steel band (212B) of the tire pressure monitoring module (20), an air tap cover (212C) of the tire, an external antenna (212D) on the tire pressure monitoring module (20), and a printed antenna (212E) the circuit board of the tire pressure monitoring module (20).

3. The smart antenna system (32) of claim 2, wherein external antenna (212E) on the tire pressure monitoring module (20) is a helical external antenna.

4. A smart tire pressure monitoring system (30), comprising:
a vehicle controller (10) disposed in a vehicle;
a tire micro control unit (210) disposed in a vehicle tire and communicating with the vehicle controller (10) via wireless signals;
a tire RF transmit unit (202) electrically connected to the tire micro control unit (210);
a tire RF receive unit (204) electrically connected to the tire micro control unit (210);
a tire pressure inspecting unit (206) electrically connected to the tire micro control unit (210); and
a plurality of antennas (212A~212E) electrically connected to the tire RF transmit unit (202) and the tire RF receive unit (204),
wherein, the vehicle controller (10) selects the antenna transmitting test signals with highest received signal strength indication (RSSI) among the antennas (212A~212E) as a default antenna; the tire micro control unit (210) sends a tire pressure data signal to the vehicle controller (10) for displaying a tire pressure data via the default antenna.

5. The smart tire pressure monitoring system (30) of claim 4, wherein the antennas are at least two of a air tap of the tire (212A), a fixing steel band (212B) of the tire pressure monitoring module (20), an air tap cover (212C) of the tire, an external antenna (212D) on the tire pressure monitoring module (20), and a printed antenna (212E) the circuit board of the tire pressure monitoring module(20).

6. The smart tire pressure monitoring system (30) of claim 5, wherein external antenna (212E) on the tire pressure monitoring module (20) is a helical external antenna.

7. A smart antenna method for tire pressure monitoring used in a vehicle controller (10) and at least a tire pressure monitoring module (20), the tire pressure monitoring module (20) comprising a plurality of antennas (212A~212E), one of the antennas (212A ~212E) sending a tire pressure data signal to the vehicle controller (10) for displaying a tire pressure data, the smart antenna method comprising:
a. transmitting a test signal respectively to the vehicle controller (10) by the antenna of the tire pressure monitoring module (20);
b. receiving the test signal transmitted by the antenna and recording the received signal strength indication (RSSI) of the test signal by the vehicle controller (10);
c. comparing RSSI strength of the test signal and selecting the antenna transmitting test signals with highest RSSI among the antennas (212A~212E) as a default antenna by the vehicle controller (10);
d. transmitting data of the default antenna to the tire pressure monitoring module (20) by the vehicle controller (10); and
e. selecting the antenna to send the tire pressure data signal according to data of the default antenna by the tire pressure monitoring module (20).

8. The smart antenna method of claim 7, the method further comprising a step f:
returning to the step a when bit error rate of the tire pressure data signal sent by the default antenna increases.

9. The smart antenna method of claim 7, wherein the antennas are at least two of a air tap of the tire (212A), a fixing steel band (212B) of the tire pressure monitoring module (20), an air tap cover (212C) of the tire, an external antenna (212D) on the tire pressure monitoring module (20), and a printed antenna (212E) the circuit board of the tire pressure monitoring module (20).

10. The smart antenna method of claim 9, wherein the external antenna (212E) on the tire pressure monitoring module (20) is a helical external antenna.

## Amended claims

### Amended claims in accordance with Rule 137(2) EPC.

**1.** A smart antenna system (32) for tire pressure monitoring used in a vehicle controller (10) and comprising at least a tire pressure monitoring module (20); the tire pressure monitoring module (20) comprising:
- a tire micro control unit (210);
- a tire RF transmit unit (202) electrically connected to the tire micro control unit (210);
- a tire RF receive unit (204) electrically connected to the tire micro control unit (210);
- a tire pressure inspecting unit (206) electrically connected to the tire micro control unit (210),
**characterized in that** the system (32) further comprises:
- a plurality of antennas (212A, 212E) electrically connected to the tire RF transmit unit (202) and the tire RF receive unit (204),
wherein, the tire micro control unit (210) selects a default antenna among the a plurality of antennas (212A, 212E) to send a tire pressure data signal to the vehicle controller (10) for displaying a tire pressure data via the default antenna of the smart tire pressure monitoring module (20) after a default antenna signal sent by the vehicle controller (10) is received.

**2.** The smart antenna system (32) of claim 1, wherein the antennas include at least two of a air tap of the tire (212A), a fixing steel band (212B) of the tire pressure monitoring module (20), an air tap cover (212C) of the tire, an external antenna (212D) on the tire pressure monitoring module (20), and a printed antenna (212E) the circuit board of the tire pressure monitoring module (20).

**3.** The smart antenna system (32) of claim 2, wherein external antenna (212E) on the tire pressure monitoring module (20) is a helical external antenna.

**4.** A smart tire pressure monitoring system (30), comprising:
- a vehicle controller (10) disposed in a vehicle;
- a tire micro control unit (210) disposed in a vehicle tire and communicating with the vehicle controller (10) via wireless signals;
- a tire RF transmit unit (202) electrically connected to the tire micro control unit (210);
- a tire RF receive unit (204) electrically connected to the tire micro control unit (210);
- a tire pressure inspecting unit (206) electrically connected to the tire micro control unit (210),
**characterized in that** the system (30) further comprises:
- a plurality of antennas (212A, 212E) electrically connected to the tire RF transmit unit (202) and the tire RF receive unit (204),
wherein, the vehicle controller (10) selects the antenna transmitting test signals with highest received signal strength indication (RSSI) among the antennas (212A, 212E) as a default antenna; the tire micro control unit (210) sends a tire pressure data signal to the vehicle controller (10) for displaying a tire pressure data via the default antenna.

**5.** The smart tire pressure monitoring system (30) of claim 4, wherein the antennas are at least two of a air tap of the tire (212A), a fixing steel band (212B) of the tire pressure monitoring module (20), an air tap cover (212C) of the tire, an external antenna (212D) on the tire pressure monitoring module (20), and a printed antenna (212E) the circuit board of the tire pressure monitoring module(20).

**6.** The smart tire pressure monitoring system (30) of claim 5, wherein external antenna (212E) on the tire pressure monitoring module (20) is a helical external antenna.

**7.** A smart antenna method for tire pressure monitoring used in a vehicle controller (10) and at least a tire pressure monitoring module (20), the tire pressure monitoring module (20) comprising a plurality of antennas (212A, 212E), one of the antennas (212A, 212E) sending a tire pressure data signal to the vehicle controller (10) for displaying a tire pressure data, the smart antenna method comprising:
a. transmitting a test signal respectively to the vehicle controller (10) by the antenna of the tire pressure monitoring module (20);
b. receiving the test signal transmitted by the antenna and recording the received signal strength indication (RSSI) of the test signal by the vehicle controller (10);
c. comparing RSSI strength of the test signal and selecting the antenna transmitting test signals with highest RSSI among the antennas (212A, 212E) as a default antenna by the vehicle controller (10);
d. transmitting data of the default antenna to the tire pressure monitoring module (20) by the vehicle controller (10); and
e. selecting the antenna to send the tire pressure data signal according to data of the default antenna by the tire pressure monitoring module (20).

**8.** The smart antenna method of claim 7, the method further comprising a step f: returning to the step a when bit error rate of the tire pressure data signal sent by the default antenna increases.

**9.** The smart antenna method of claim 7, wherein the antennas are at least two of a air tap of the tire (212A), a fixing steel band (212B) of the tire pressure monitoring module (20), an air tap cover (212C) of the tire, an external antenna (212D) on the tire pressure monitoring module (20), and a printed antenna (212E) the circuit board of the tire pressure monitoring module (20).

**10.** The smart antenna method of claim 9, wherein the external antenna (212E) on the tire pressure monitoring module (20) is a helical external antenna.
